Europäisches Patentamt

European Patent Office

Office européen des brevets

(11) Numéro de publication : **0 289 575 B1**

(12) **FASCICULE DE BREVET EUROPEEN**

(19)

(45) Date de publication du fascicule du brevet :
**25.03.92 Bulletin 92/13**

(21) Numéro de dépôt : **87907620.6**

(22) Date de dépôt : **13.11.87**

(86) Numéro de dépôt international :
**PCT/FR87/00447**

(87) Numéro de publication internationale :
**WO 88/03459 19.05.88 Gazette 88/11**

(51) Int. Cl.⁵ : **B24B 1/00,** B24B 41/04

(54) **PROCEDE D'USINAGE ULTRA-PRECIS APPLIQUE A L'EXECUTION DE SURFACES ATYPIQUES DE REVOLUTION ET AUX USINAGES ASSERVIS.**

Le dossier contient des informations techniques présentées postérieurement au dépôt de la demande et ne figurant pas dans le présent fascicule.

(30) Priorité : **13.11.86 FR 8615763**

(43) Date de publication de la demande :
**09.11.88 Bulletin 88/45**

(45) Mention de la délivrance du brevet :
**25.03.92 Bulletin 92/13**

(84) Etats contractants désignés :
**CH DE GB IT LI SE**

(56) Documents cités :
**EP-A- 0 193 609**
**US-A- 4 180 946**

(73) Titulaire : **SOCIETE EUROPEENNE DE PROPULSION (S.E.P.) S.A.**
**24, rue Salomon de Rothschild**
**F-92150 Suresnes (FR)**

(72) Inventeur : **FOUCHE, Claude**
**5, rue de la Dîme**
**F-27620 Gasny (FR)**

(74) Mandataire : **Thévenet, Jean-Bruno**
**Cabinet BEAU DE LOMENIE 55 rue d'Amsterdam**
**F-75008 Paris (FR)**

# Description

La présente invention a pour objet un procédé d'usinage ultra-précis de surfaces de révolution typiques et atypiques.

Les machines-outils de haute précision pour l'usinage de surfaces complexes en coordonnées cartésiennes ou en coordonnées polaires utilisent une broche porte-pièce montée sur une glissière généralement commandée par un système vis-écrou associé à un moteur électrique à courant continu dont le rotor est couplé directement à la vis d'entraînement de la glissière. Le rotor de la broche sur lequel est fixée la pièce est monté dans la broche à l'aide de paliers à air qui confèrent au rotor de broche une raideur élevée.

L'utilisation de paliers à air impose la réalisation d'entrefers très réduits, de l'ordre de 5 Mm, entre le rotor de broche et le corps de broche. Ceci ne permet pas d'éviter des mouvements résiduels de perturbation au niveau du rotor de broche qui limitent la précision d'autant plus que les défauts des glissières ne peuvent jamais être totalement éliminés.

On a déjà proposé de réaliser la rectification de pièces montées sur des paliers magnétiques actifs afin d'obtenir une grande précision et une grande stabilité dans le contrôle de la rotation de la pièce. Ceci implique cependant de disposer de paliers magnétiques amovibles et ne peut s'appliquer qu'à la réalisation de pièces d'une certaine géométrie.

On connait par ailleurs par le brevet US 4 180 946 qui correspond au brevet FR-A-2 326 270 une broche porte-outil, notamment pour rectifieuse, dont l'arbre est monté dans des paliers magnétiques actifs cinq axes, et qui comporte un moteur électrique d'entraînement incorporé dans le corps de la broche et situé entre les deux paliers radiaux d'extrémité. Une telle broche porte-outil présente une certaine souplesse d'utilisation pour effectuer un certain nombre d'opérations d'usinage, mais n'est pas adaptée pour être incorporée dans l'architecture d'une machine-outil de très haute précision.

La présente invention vise à remédier aux inconvénients précités et à permettre d'effectuer des travaux d'usinage variés de très haute précision pour réaliser des surfaces typiques ou atypiques dont la forme générale est de révolution, avec une machine présentant une grande souplesse d'utilisation et d'adaptation à la réalisation de travaux spéciaux divers de haute qualité.

Ces buts sont atteints grâce à un procédé d'usinage ultra-précis d'une surface de révolution sur une pièce, caractérisé en ce que l'on maintient en position ladite pièce à l'aide du rotor d'une broche porte-pièce monté par l'intermédiaire d'une suspension magnétique active à cinq axes sur une glissière de guidage selon un axe YY', l'usinage étant effectué au moyen d'un outil positionné à l'aide de moyens mécaniques guidés déplaçables en translation selon une direction prédéterminée XX' ou en rotation autour d'un axe de rotation prédéterminé, en ce que l'on met en oeuvre les étapes suivantes ;

a) asservir les paliers magnétiques actifs radiaux et axial de la suspension magnétique avec des fréquences propres inférieures à environ 80 Hz,

b) entraîner en rotation le rotor de la broche porte-pièce à une vitesse prédéterminée inférieure auxdites fréquences propres, et comprise entre environ 20 et 75 Hz,

c) surveiller en permanence les déplacements de la glissière porte-broche et des moyens de positionnement de l'outil à l'aide de capteurs de déplacement,

d) modifier de façon sélective les positions radiales et axiale du rotor de la broche porte-pièce par rapport à une position nominale par application aux circuits de commande des paliers magnétiques radiaux et axial de tensions de référence variables en fonction de signaux de commande délivrés selon la position de l'outil,

e) inhiber le déplacement de la glissière porte-broche lorsque lesdits signaux de commande sont inférieurs à des valeurs prédéterminées, et

f) déplacer les moyens mécaniques guidés portant l'outil à une vitesse déterminée correspondant à une fréquence d'usinage donnée, définie par l'inverse du temps que met l'outil à parcourir le rayon maximal de la pièce, et en ce que, lorsque les signaux de commande sont supérieurs auxdites valeurs prédéterminées, on commande en premier lieu le déplacement de la glissière porte-broche en fonction desdits signaux de commande délivrés selon la position de l'outil, puis on met en oeuvre l'étape d) en utilisant comme signaux de commande des signaux représentant l'erreur de positionnement ou de vitesse de la glissière porte-broche par rapport à la commande imposée.

De préférence, on peut entraîner en rotation le rotor de la broche porte-pièce à une vitesse prédéterminée comprise entre 20 et 40 Hz.

Selon une première série d'applications du procédé selon l'invention, lesdits signaux de commande d'usinage sont délivrés selon la position de l'outil par un capteur de déplacement solidaire des moyens guidés assurant le déplacement de l'outil et disposé dans un plan vertical contenant l'axe de l'outil et on dispose en regard dudit capteur de déplacement dans une position fixe une pièce étalon ou gabarit comprenant une surface de référence à recopier sur la pièce à usiner.

De façon particulière, on peut traiter les signaux émis par le capteur de déplacement pour élaborer des singaux de commande destinés à former sur la pièce à usiner une surface homothétique ou anamorphosée par rapport à la surface de référence à recopier ou une réplique complémentaire de ladite surface de référence.

Selon une deuxième série d'applications du procédé selon l'invention, lesdits signaux de commande sont délivrés selon la position de l'outil à partir d'une mémoire dans laquelle sont enregistrées les coordonnées des différents points de la méridienne échantillonnée d'une pièce étalon à reproduire.

Dans ce cas, selon une application plus particulière, selon la position de l'outil on procède à la lecture, à partir d'une mémoire, d'une part des coordonnées du point correspondant à la méridienne échantillonnée d'une pièce étalon à reproduire, d'autre part, de la vitesse de déplacement des moyens guidés de positionnement de l'outil et de la vitesse de déplacement de la glissière porte-broche, on détecte à l'aide d'un premier capteur la vitesse réelle de déplacement desdits moyens guidés, on détecte à l'aide d'un second capteur la vitesse réelle de déplacement de ladite glissière, on compare les valeurs mesurées des vitesses de déplacement aux vitesses lues pour la position considérée de l'outil et, en cas de différence entre une valeur mesurée et une valeur lue, on pilote le déplacement radial respectivement axial du rotor de la broche porte-pièce en vitesse de manière à annuler ladite différence de vitesse.

Selon encore une troisième série d'applications du procédé selon l'invention, lesdits signaux de commande de position du rotor de broche sont constitués par des signaux périodiques d'amplitude et de fréquence prédéterminées.

Dans ce cas, les signaux périodiques de commande du rotor de broche peuvent présenter une fréquence inférieure à ladite fréquence d'usinage de manière à réaliser une surface convexe ou concave.

Les signaux périodiques de commande du rotor de broche peuvent présenter une fréquence supérieure à ladite fréquence d'usinage, mais inférieure à ladite vitesse de rotation de la broche porte-pièce de manière à réaliser sur la surface à usiner des spirales à amplitudes contrôlables constituant des étalons de rugosité.

Les signaux périodiques de commande du rotor de broche peuvent présenter une fréquence multiple de la vitesse de rotation de la broche porte-pièce de manière à réaliser sur la pièce à usiner des cannelures rayonnantes.

Les signaux de commande utilisés dans le cadre de la présente invention peuvent ainsi avoir plusieurs origines :

1) Ils peuvent être prédéterminés pour pouvoir exécuter des variantes, telles que bombés, cannelures, spirales, arrondis, congés, à partir de formes simples ou de formes générées par un gabarit mécanique ou informatique,

2) Ils peuvent résulter, dans le cas d'un usinage asservi, de l'écart résiduel mesuré entre le gabarit mécanique ou informatique et la position effective de la glissière commandée (par exemple la glissière porte-broche), la commanda de cette glissière étant effectuée selon ce gabarit par un procédé d'asservissement classique,

3) Ils peuvent résulter de l'écart entre le vecteur vitesse du déplacement relatif de l'outil sur la pièce en usinage et d'un vecteur vitesse prédéterminé,

4) Ils peuvent résulter du signal envoyé par un capteur lisant un gabarit mécanique ou d'un signal émis par un ordinateur, représentatif de la pièce à usiner dans la plage de $\pm$ 150 µm.

Les signaux de commande peuvent aussi provenir d'une combinaison de différents signaux appartenant aux catégories susmentionnées.

Le procédé et le dispositif selon l'invention permettent d'obtenir des performances du domaine de la précision optique. Ainsi, à titre d'exemple, un usinage de pièces réalisé conformément à l'invention en utilisant une broche porte-pièce montée sur paliers magnétiques asservis a permis d'obtenir des pièces cylindriques pour lesquelles les défauts de circularité ou te cylindricité sont inférieurs au dixième de micron. Ainsi, une pièce usinée de diamètre 220 mm en alliage d'aluminium AG5 présenta un écart , crête à crête de 0,1 µm et une pièce usinée de diamètre 55 mm en germanium présente un écart crête à crête de 0,089 µm .

Des pièces planes présentent également de très faibles défauts de planéité. Ainsi, des pièces de diamètre 105 mm en alliage d'aluminium AG5 et germanium présentent respectivement des écarts de forme par rapport au plan de $\lambda$/ 2,3 et $\lambda$/ 8 (avec $\lambda$ = 0,6320 µm ).

D'autres caractéristiques et avantages de l'invention ressortiront de la description suivante de modes particuliers de réalisation donnés à titre d'exemples, en référence aux dessins annexés, sur lesquels :

– la figure 1 est une vue schématique en coupe axiale d'une poupée porte-pièce à paliers magnétiques actifs utilisable dans le cadre de la présente invention,

– les figures 2 et 3 sont des vues respectivement de dessus et en élévation d'un exemple de machine à usiner dans un système d'axes en coordonnées orthogonales à laquelle est applicable l'invention,

– les figures 4 et 5 sont des vues respectivement de dessus et en élévation d'un exemple de machine à usiner dans un système d'axes en coordonnées polaires, à laquelle est applicable l'invention,

– les figures 6 et 7 sont des vues schématiques montrant la mise en oeuvre d'un usinage de surfaces de révolution par recopie dans un système d'axes cartésien,

– les figures 8 à 11 sont des vues schématiques montrant la mise en oeuvre d'un usinage de surfaces de révolution par recopie dans un système d'axes en coordonnées polaires,

– la figure 12 est une vue schématique semblable à celle de la figure 6 mais dans laquelle les circuits de commande de la position du porte-pièce sont représentés de façon plus détaillée,

– la figure 13 correspond à un mode de réalisation analogue à celui de la figure 12, mais dans lequel les caractéristiques des surfaces à usiner sont synthétisées dans une mémoire d'ordinateur, et

– la figure 14 correspond à un mode de réalisation voisin de celui de la figure 13, mais selon lequel les vitesses d'usinage sont contrôlées.

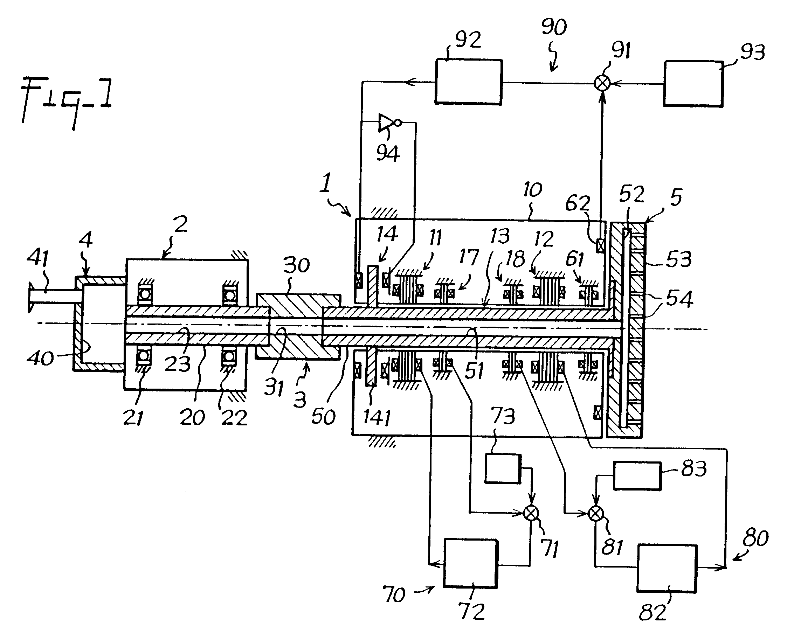

La figure 1 montre de façon schématique la structure d'ensemble d'un exemple de broche porte-pièce 1 à paliers magnétiques actifs prévue pour être montée sur une glissière d'une machine à usiner de haute précision et permettant la mise en oeuvre de la présente invention.

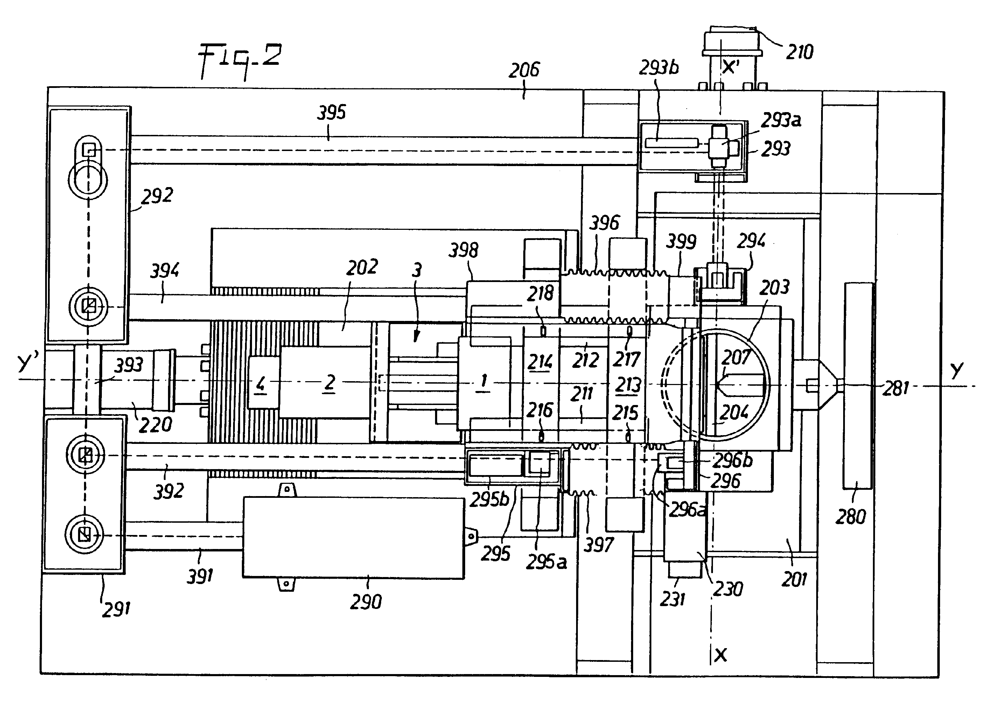

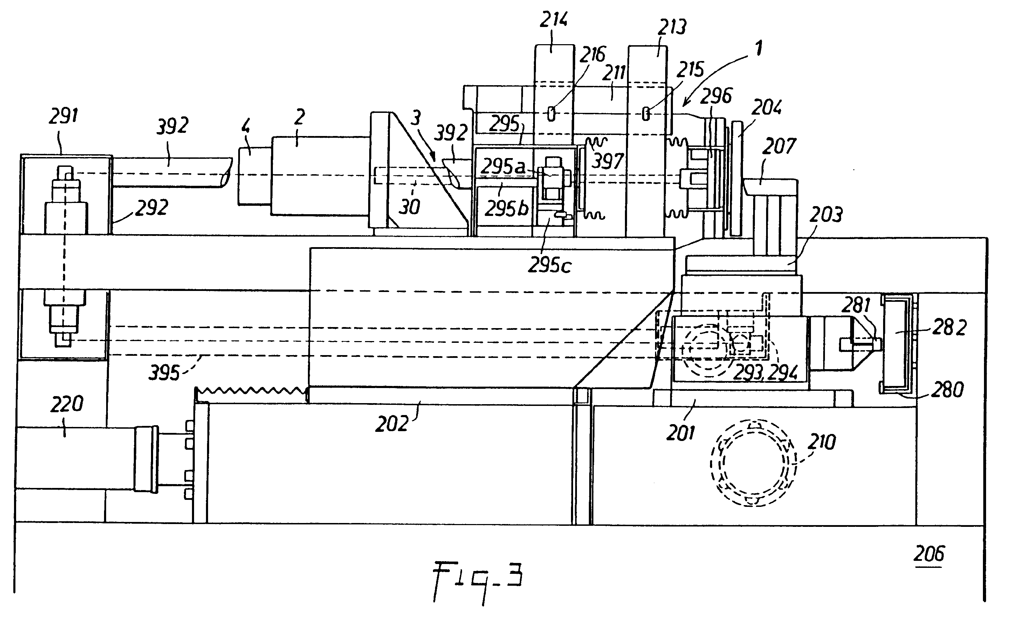

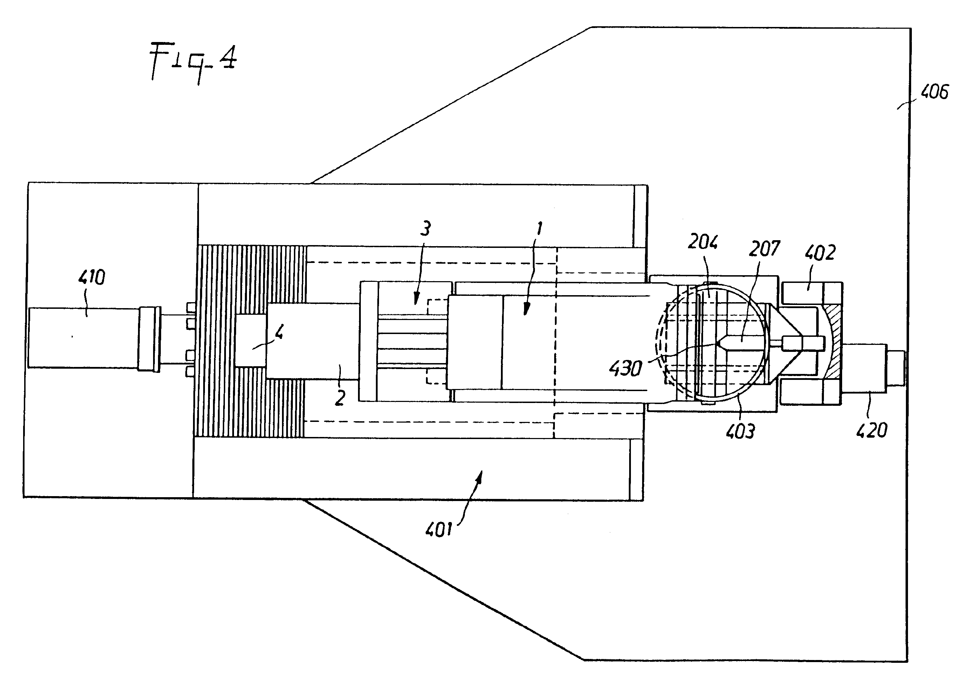

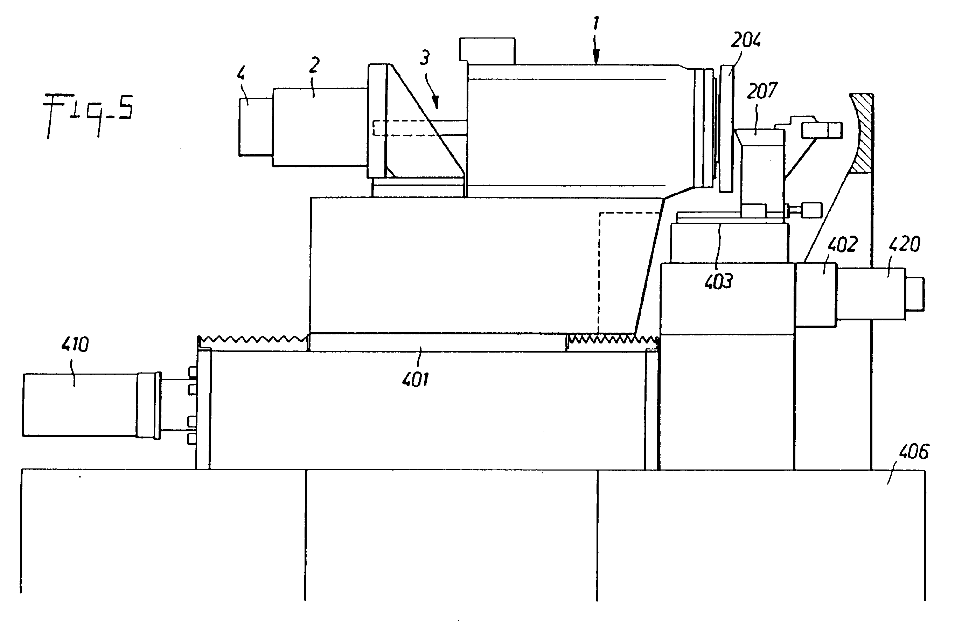

La broche 1 comprend un corps de broche 10 rendu solidaire d'une glissière, telle que la glissière référencée 202 sur les figures 2 et 3 et 401 sur les figures 4 et 5. Le corps de broche 10 sert de logement pour les éléments statoriques d'un palier magnétique radial avant 12 et d'un palier magnétique radial arrière 11 qui définissent avec le rotor 50 de la broche 1 un entrefer 13 relativement important, de l'ordre de 0,3 mm. Le corps de broche 10 incorpore également des éléments statoriques de palier magnétique axial qui coopèrent avec un disque 141 solidaire de la partie arrière du rotor de broche 50, et perpendiculaire à l'axe de ce dernier, pour constituer une butée axiale.

Le rotor de broche 50 se termine à sa partie avant par un mandrin porte-pièce 5 fixé sur l'axe de la broche 1 et présente un diamètre supérieur à celui du rotor de broche 50. Dans le cas préférentiel, tel que représenté sur la figure 1, où le mandrin 5 est un plateau à aspiration, le mandrin porte-pièce 5 présente une cavité 52 qui est en communication avec un conduit 51 ménagé axialement à l'intérieur du rotor de broche 50. Des orifices 54 sont répartis dans la face frontale 53 du disque porte-pièce 5 et débouchent dans la cavité 52 pour assurer, par aspiration, le maintien d'une pièce à usiner en contact avec la face frontale 53 du disque porte-pièce 5.

Le rotor 50 de la broche 1 est entrainé en rotation à partir d'un moteur électrique 2 qui est extérieur au corps de broche 10 et comprend un rotor 20 pouvant être monté sur des roulements à billes de précision 21, 22, sur des rouleaux coniques ou encore sur des paliers magnétiques. Le moteur extérieur 2 est conçu de manière à ne pas avoir un faux rond supérieur à quelques microns.

L'arbre de broche 50 et le rotor 20 du moteur extérieur 2 sont reliés par un accouplement 3 destiné à assurer la transmission du couple moteur tout en filtrant les perturbations mécaniques issues du faux rond du moteur.

Le dispositif d'accouplement 3 est avantageusement constitué par un tuyau 30 en élastomètre ou autre matière présentant des propriétés élastiques similaires, qui est fixé de façon étanche aux extrémités libres du rotor 20 du moteur 2 et du rotor 50 de la broche 1. Un tel mode d'accouplement garantit une étanchéité au niveau de la liaison entre le moteur 2 et l'arbre de broche 50, sans adjonction de joint supplémentaire tout en assurant de façon pleinement satisfaisante, les fonctions mécaniques susmentionnées.

Un conduit 31 est défini axialement à l'intérieur de l'accouplement et assure une continuité entre le conduit 51 du rotor de broche 50 et un conduit 23 formé axialement dans le rotor 20 du moteur 2. Le conduit 31 est réalisé de manière à assurer une continuité de l'étanchéité entre les conduits 23, 31 et 51.

Un boîtier d'aspiration 4 délimitant une chambre de répartition 40 est rapporté à l'arrière du moteur 2 et fixé de façon rigide sur le stator de celui-ci. La chambre 40 communique d'une part avec une pompe à vide, non représentée, par l'intermédiaire d'une tubulure 41 et d'autre part, avec le conduit 23 ménagé dans le rotor 20 du moteur 2. Avec un tel agencement, les fuites les plus importantes vers l'extérieur provenant du circuit d'aspiration constitué par la chambre 40, les conduits 23, 31, 51 et la chambre 52, sont situées au niveau de l'entrefer ménagé entre le rotor 20 du moteur 2 et le stator de ce moteur. Compte tenu de la faible valeur de cet entrefer (de l'ordre de 0,1 mm), les pertes de charge dues à ces fuites sont relativement faibles. Il n'est donc pas nécessaire d'installer un joint à chicanes ou un joint tournant toujours délicats à mettre en oeuvre et qui provoquent systématiquement des vibrations axiales.

Le système d'aspiration, qui assure le pompage dans la chambre 52 du plateau porte-pièce 5 depuis la pompe à vide par l'intermédiaire du rotor de broche 50, de l'accouplement 3 à tuyau élastomère ou à soufflets métalliques, du rotor 20 du moteur 2 et du boîtier d'aspiration 4 garantit que toutes les perturbations mécaniques inévitables dues au pompage, notamment les perturbations dans le sens axial, sont reprises totalement par le moteur 2 et ne sont pas transmises au rotor 50 de la broche, compte tenu de la présence de l'accouplement 3.

L'absence de moteur électrique incorporé entre les paliers radiaux et l'absence de pompage effectué immédiatement à l'arrière du rotor de broche 50 permettent de conserver un rotor de broche 50 compact de faible longueur, qui confère ainsi à la broche une raideur et une stabilité accrues.

La suspension magnétique du rotor de la broche 50 à l'intérieur du corps de broche 10 comprend des premier et second paliers magnétiques actifs radiaux 11, 12 disposés respectivement à la partie arrière et à la partie avant du corps de broche 10. Chaque palier magnétique radial 11, 12 comprend, de façon connue en soi, un stator formé d'un empilement de tôles et de bobinages et une armature qui est rapportée sur le rotor 50 de la broche. Chaque palier radial 11, 12 est qualifié d'actif car il est associé à une boucle d'asservissement 70, 80 et à au moins un détecteur radial de la position du rotor 50, référencé 17, respectivement 18, 61, disposé au voisinage du palier radial correspondant. Comme cela est connu dans le domaine des paliers magnétiques actifs, les détecteurs radiaux 17, 18, 61 peuvent être du type inductif avec une armature statorique et des enroulements disposés en regard d'une piste annulaire de référence formée sur le rotor 50. On utilise avantageusement pour les détecteurs 17, 18, 61 des détecteurs radiaux à réjection d'harmoniques tels que ceux décrits dans le brevet français 2 214 890.

Compte tenu de l'application de la broche porta-pièce 1 à des machines de très haute précision, il est nécessaire d'effectuer une rectification du rotor de broche 50 afin d'améliorer les tolérances géométriques (concentricité des paliers et détecteurs), mais aussi d'augmenter la circularité des pistes des détecteurs ainsi que celle des paliers.

Sur la figure 1, on a représenté de façon très schématique les boucles d'asservissement 70, 80 associées aux paliers radiaux 11, 12 et la boucle d'asservissement 90 associée au palier axial 14. Bien que les boucles d'asservissement 70 et 80 soient représentées sous la forme de circuits d'asservissement indépendants l'un de l'autre, des interactions peuvent naturellement exister, comme décrit par exemple dans le brevet US 3 787 100.

Dans chaque boucle d'asservissement 70, 80, les signaux délivrés par au moins un détecteur radial 17 respectivement 18 ou 61 sont comparés dans un soustracteur 71, 81 à une tension de référence fournie par un circuit 73, 83. Le signal d'erreur issu du soustracteur 71,81 est appliqué à un circuit de traitement et d'amplification 72, 82 qui délivre un signal de sortie servant à l'alimentation des enroulements du palier radial correspondant 11, 12. D'une façon similaire, les signaux délivrés par le détecteur axial 62 sont comparés dans un soustracteur 91 à une tension de référence fournie par un circuit 93. Le signal d'erreur issu du soustracteur est appliqué à un circuit de traitement et d'amplification. 92 dont les signaux de sortie servent à alimenter directement, ou après changement de signe par un inverseur 94, les enroulements de la butée axiale 14,

Comme cela sera expliqué plus loin, les circuits 73, 83,93 servent à élaborer une tension électrique de référence dont le rôle est de définir la position nominale du rotor 50 par rapport au corps de broche 10. Cette position nominale peut varier entre une position centrale avec un entrefer dont la valeur est la même en tout point et une position volontairement désaxée avec localement un entrefer dont la valeur minimum peut être de l'ordre de la moitié de l'entrefer existant lorsque le rotor est en position parfaitement centrée. L'action sur les tensions de référence fournies par les circuits 73, 83, 93 permet non seulement de corriger des défauts provenant d'organes mécaniques extérieurs à la broche elle-même, mais également de définir de façon précise des positions particulières du porte-pièce 5 et donc de la pièce à usiner.

Selon la présente invention, on choisit des fréquences propres d'asservissement inférieures à 80 Hz et comprises par exemple, entre environ 50 et 60 Hz et on fait tourner la broche porte-pièce à une vitesse comprise entre environ 20 et 75 tours/s et de préférence entre 25 et 40 tours/s dans le cas de cet exemple. Les boucles d'asservissement présentent des pointes de gain au moins pour le premier harmonique de la vitesse de rotation et le cas échéant sur les deux ou trois premiers harmoniques, qui constituant des fréquences vibratoires, qui dans la spectre d'usinage, présentent les plus grandes amplitudes.

On décrira maintenant des exemples de machines-outils de très haute précision sur lesquelles peut être installée la broche porte-pièce 1 de la figure 1.

Un premier exemple de machine à usiner des surfaces complexes dans un repère cartésien XX', YY' est représenté sur les figures 2 et 3.

Deux glissières 201, 202 dont les axes de déplacement XX' et YY' sont perpendiculaires sont placées sur un support 206, tel qu'un massif de granit, qui est désolidarisé du sol à l'aide d'une suspension pneumatique.

La glissière 201 supporte un plateau tournant 203 sur lequel est placé un outil 207 tandis que la glissière 202 supporte une broche porte-pièce 1 qui peut être conforme à la description faite plus haut. Une pièce à usiner 204 est placée sur le disque porte-pièce qui prolonge la broche 1.

Le plateau tournant 203 permet d'orienter l'outil de telle sorte que ce soit la même partie de l'arête coupante de l'outil qui effectue l'usinage, ce qui permet de s'affranchir des irrégularités géométriques de l'arête.

Des moteurs électriques à courant continu 210, 220 entraînent chacun un système vis-écrou qui assure le déplacement de la glissière 201, 202 respectivement. Les glissières 201, 202 sont pilotées par une commande numérique et leur déplacement est mesuré par un dispositif interférométrique Doppler, connu en soi.

Le dispositif interférométrique comprend essentiellement une source laser 290, des boîtiers 291, 292 comprenant des cubes de renvoi, un boîtier à miroir plan 294 et un boîtier d'interféromètre 293 pour la mesure du déplacement de la glissière 201 de l'outil, deux boîtiers à miroir plan 296, 399 et deux boîtiers d'interféromètre 295, 398 pour la mesure du déplacement de la glissière 202 de la broche, des soufflets 397, 396 de liaison entre les boîtiers d'interféromètre 295, 398 et les boîtiers de miroirs plans 296, 399 et des tubes 391 à 395 de protection des faisceaux laser de mesure. Les boîtiers à miroir plan 294, 296, 399 comprennent chacun, comme le boîtier 296, un miroir plan 296a et des butées de réglage 296b. Les boîtiers d'interféromètre 293, 295, 398 comprennent chacun un interféromètre de mesure 293a, 295a, un récepteur 293b, 295b, ainsi qu'un dispositif de réglage tel que 295c.

Pour que les surfaces usinées soient correctes, il est nécessaire que la broche tourne parfaitement rond mais aussi que le déplacement de la broche s'effectue avec précision. On est ainsi obligé de détecter les mouvements de la glissière porte-broche 202 et d'effectuer une correction en déplaçant le rotor 50 radialement. Cette correction peut atteindre ± 150 µm, ce qui est important. Pour que les défauts engendrés par le déplacement de la glissière porte-outil 201 ne s'impriment pas sur la pièce à usiner il est encore nécessaire de pouvoir détecter le mouvement de la glissière 201 au niveau de l'outil pour interagir au niveau du rotor 50 axialement. Cette correction peut atteindre 150 µm .

La broche porte-pièce 1 permet en outre de compenser des défauts des éléments mécaniques de la machine-outil. Par action sur les boucles d'asservissement de la broche porte-pièce 1 à paliers magnétiques, il est possible de maintenir l'axe de la broche parfaitement positionné malgré les défauts de roulis, tangage ou lacet et les défauts de rectitude dûs aux déplacements d'une glissière 201, 202.

Une telle compensation peut être effectuée en temps réel si dans chaque plan d'asservissement des paliers magnétiques radiaux 11, 12 on place deux détecteurs par exemple de type capacitif, 216, 218 respectivement 215, 217 montés sur des consoles 214, 213 solidaires du corps 10 de la broche et qui détectent des variations de distance par rapport à des surfaces de référence plane fixes 211, 212 placées parallèlement à la direction YY' de déplacement de la glissière 212 porte-broche. Les surfaces 211, 212, qui sont perpendiculaires aux axes d'asservissement présentent un angle proche de 45° par rapport au plan de support de la broche 1.

La surface plane de référence 211 est commune aux détecteurs 215, 216 tandis que la surface plane de référence 212 est commune aux détecteurs 217, 218. Les surfaces planes de référence 211, 212 sont constituées de préférence par des miroirs métallisés.

Les signaux issus des détecteurs 215 à 218 sont traités et envoyés respectivement dans les boucles d'asservissement des paliers radiaux correspondants pour modifier les tensions de référence qui déterminent la position de l'axe du rotor 50 radialement par rapport aux stators des paliers magnétiques 11, 12.

Si maintenant on considère l'outil 207 placé sur sa glissière 201, pour garantir que la pointe de l'outil 207 reste dans un plan perpendiculaire à l'axe de la broche 1 quand la glissière 201 est activée, il est nécessaire de placer un détecteur 281 dans un plan axial vertical de l'outil 207. Ce détecteur 281 solidaire de la glissière 201 mesure les variations de proximité avec une surface plane de référence 282 préalablement placée perpendiculairement à l'axe de la broche 50. Le détecteur 281 est de préférence de type capacitif et coopère avec un miroir plan 282 monté dans un support fixe 280.

Le signal issu du détecteur 281 est traité puis envoyé dans la boucle d'asservissement du palier magnétique axial 14 afin de modifier la tension de référence qui définit la position de l'axe du rotor 50 par rapport au corps de broche.

Sur la figure 2, les références 230, 231 désignent respectivement le moteur électrique à courant continu d'entraînement en rotation du plateau tournant 203 et une génératrice tachymétrique. Un codeur angulaire est en outre associé au plateau tournant 203.

Les figures 4 et 5 représentent un exemple de machine à usiner les surfaces complexes, de type polaire, qui comprend une broche 1 à axe horizontal pouvant être conforme à la broche décrite plus haut, placée sur une glissière 401 qui enjambe un plateau tournant 403 à axe vertical sur lequel est placée une glissière 402 de réglage d'outil 203. Un plateau support 406, par exemple en granit est désolidarisé du sol par une suspension pneumatique. La pièce 204 est placée sur le disque porte-pièce 5 de la broche 1 comme dans la mode de réalisation des figures 2 et 3. La glissière 402 est commandée par un système vis-écrou entraîné par un moteur 420 à courant continu.

Si les déplacements du rotor 50 de la broche 1 dans ses paliers magnétiques sont programmés en fonction de la rotation du plateau tournant 403, il est possible d'obtenir sur la pièce 204 une surface aux formes particulières.

L'outil 207 peut être placé perpendiculairement à la surface à usiner, dans une position frontale, ou au contraire être placé dans une position latérale.

Une machine du type polaire présenta une structure d'ensemble plus simple qu'une structure du type cartésien et il n'est pas nécessaire d'utiliser un dispositif interférométrique de mesure comme dans le cas du mode de réalisation des figures 2 et 3. En effet, pendant l'usinage il n'est nécessaire de vérifier que la rotation, tous les autres paramètres dépendant des conditions de réglage. Une génératrice tachymétrique et un codeur angulaire associés à la plate-forme tournante 403 permettent ainsi d'assurer tout le contrôle des opérations d'usinage.

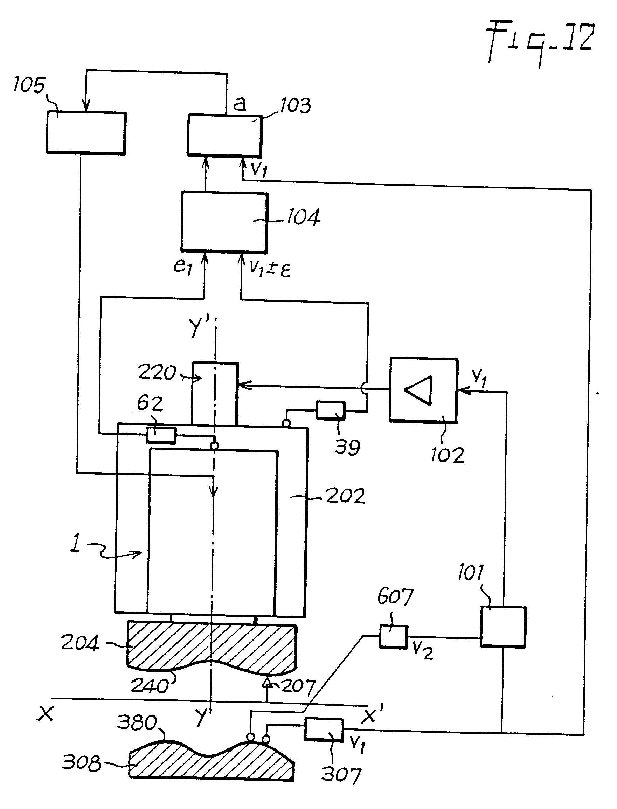

En imposant électriquement des déplacements radiaux et axiaux à une brocha porte-pièce à paliers magnétiques disposée sur une machine-outil travaillant dans un système d'axes cartésien ou polaire, il est possible à la fois de corriger les défauts des ensembles mécaniques qui se déplacent, pour engendrer des surfaces de révolution classiques ultra-précises (par exemple pour des miroirs sphériques, des lentilles optiques, des joints, des disques à mémoire magnétique), d'obtenir directement des surfaces atypiques dont la forme générale est de révolution (par exemple des étalons de rugosité, des pistes de roulement) et, comme cela va être expliqué en référence aux figures 6 à 14, d'obtenir des formes quelconques ultra précises de révolution, en utilisant un gabarit mécanique ou informatique.

On a représenté symboliquement sur la figure 6 les moyens permettant, conformément à l'invention, d'usiner une pièce 204 présentant une surface 240 qui constitue l'image ou la réplique exacte d'une surface 380 usinée au préalable par des voies conventionnelles sur une pièce étalon 308. La pièce 308 est placée de telle manière que la surface 380 s'étende le long de la direction X X' de déplacement de la glissière-outil 201. Un capteur de déplacement 307 monté sur la glissière 201 dans l'axe de l'outil 207 palpe cette surface 380 et mesure les écarts par rapport à la glissière 201. Le signal issu de ce capteur 307 est envoyé dans le circuit 93 de la boucle d'asservissement 90 du palier axial 14. La position axiale du rotor 50 de la broche 1 et donc de la pièce à usiner 204 est modifiée par rapport à celle de l'outil 207 en fonction des informations fournies par le capteur 307, ce qui permet de réaliser avec une grande précision la recopie de la forme de la surface 380 du gabarit 308.

La figure 7 représente l'usinage d'une surface 240 toroïdale par recopie d'une surface de référence 380 d'un gabarit 308 placé le long de la direction de déplacement d'une glissière-outil qui dans ce cas est parallèle à l'axe YY' de la broche 1. Les moyens sont semblables à ceux du mode de réalisation de la figure 6, mais dans ce cas, les signaux issus du capteur de déplacement 307 sont appliqués aux circuits 73, 83 des boucles d'asservissement des paliers radiaux 11, 12 de la broche 1 et non au circuit 93 de la boucle d'asservissement 90 du palier axial 14, afin de modifier la position radiale de l'axe de la pièce 204 en fonction du profil lu sur le gabarit 308.

Les signaux issus du capteur de déplacement 307 peuvent être traités dans le circuit 93 ou les circuits 73, 83 de manière à former sur la pièce à usiner 204 une surface 240 qui constitue la réplique positive ou négative de la surface de référence 380 ou qui présente des formes amplifiées ou réduites par rapport à la surface de référence 380, constituant ainsi une pièce homothétique ou anamorphosée par rapport à la pièce étalon.

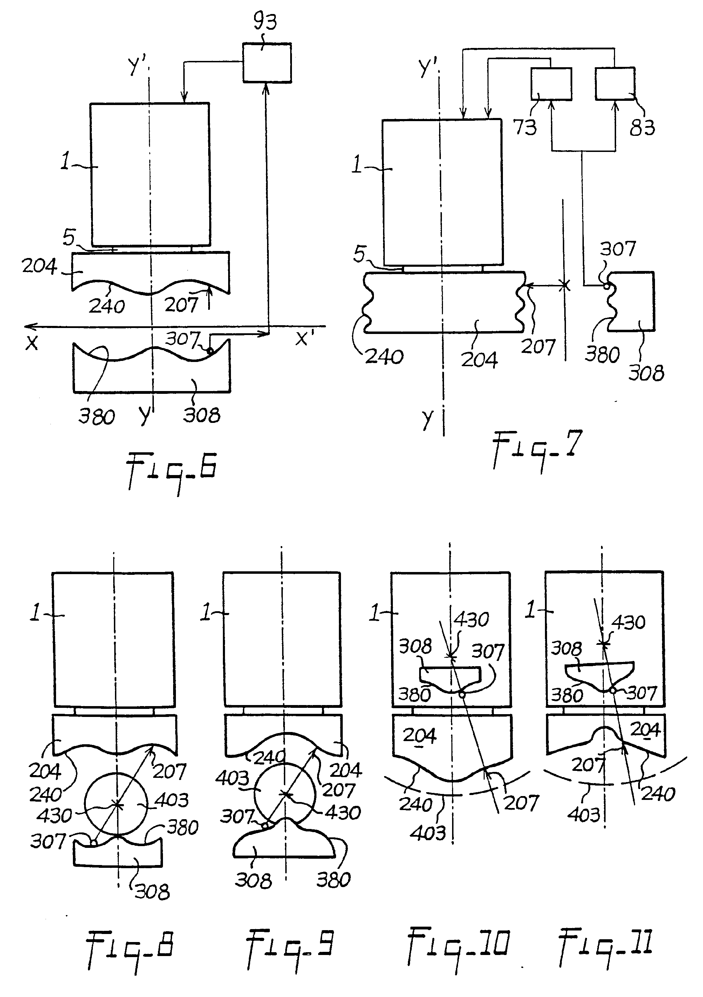

Dans le cas d'une machine où l'usinage s'opère dans un système polaire, il est de la même manière possible de faire des copies 240 de formes étalon 380 en utilisant les signaux délivrés par un capteur de déplacement 307 monté dans un plan vertical contenant l'outil 207 et passant par l'axe 430 de rotation du plateau tournant 403 supportant l'outil 207. Les signaux délivrés par le capteur 307 sont appliqués au circuit de traitement 93 de la boucle d'asservissement 90 (figures 8 à 11) de la même manière que dans le cas de la figure 6. Suivant la traitement du signal issu du capteur 307, la copie de la forme étalon 380 peut être faite en créant sur la pièce à usiner 204 des écarts par rapport à une forme sphérique qui sont positifs ou négatifs. Un simple déplacement de la glissière de la broche 1 par rapport au plateau tournant 403 permet de créer des surfaces qui sont homothétiques de la surface étalon 380.

Dans la description faite en référence aux figures 6 à 11, on a considéré que la flèche de la méridienne de la surface à recopier est inférieure à la dynamique de déplacement du rotor de la broche, de sorte que l'usinage de la pièce 204 peut être effectué en agissant exclusivement sur les boucles d'asservissement 70, 80, 90 des paliers magnétiques 11, 12, 14 desupport de la broche 1.

L'invention est toutefois applicable à la recopie de surfaces dont la flèche de la méridienne est supérieure à la dynamique du déplacement du rotor 50 de la broche 1. Un déplacement principal est donné par l'asservissement de la glissière et le déplacement correctif par celui de la broche.

Comme cela est représenté schématiquement sur la figure 12, les signaux V issus du capteur 307 sont appliqués à un circuit électronique 101 de gestion de la course de la glissière 202 et du rotor de la broche 1, lequel circuit 101 alimente lui-même un circuitélectronique 102 de commande du moteur 220 d'entraînement de la glissière 202. Lorsque le signal V dépasse un seuil e de l'ordre de $\pm$ 150 μm qui correspond à une limite de la dynamique des déplacements axiaux du rotor 50 de la broche 1 rendus possibles par une action sur le palier axial 14, le signal V est utilisé par le circuit de gestion 101 pour commander le moteur 220 d'entrainement de la glissière 202. Le signal V issu du détecteur est par ailleurs appliqué à une première entrée d'un circuit soustracteur 103 dont une deuxième entrée reçoit le signal de sortie d'un circuit additionneur 104 possédant deux entrées. L'une des entrées du circuit additionneur 104 reçoit les signaux fournis par un capteur 62 mesurant le déplacement axial $e_1$ du rotor 50 par rapport au corps 10 de la broche tandis que l'autre entrée du circuit additionneur 104 reçoit les signaux V + ε (ε étant un nombre algébrique positif ou négatif) d'un capteur 35 de mesure du déplacement axial de la glissière 202. Si la différence entre la grandeur V+ε + $e_1$ fournie par le circuit sommateur 104 et la grandeur V fournie par le capteur 307 n'est pas nulle, le circuit soustracteur 103 délivre un signal d'erreur a qui est appliqué au circuit 105 de commande du palier axial 14 de support du rotor 50 de la broche 1 en vue d'annuler ce signal d'erreur a. Il est ainsi possible d'effectuer en permanence un réglage fin et précis de la position de la pièce 204 par rapport à l'outil 207 même pour réaliser des pièces dont la forme est complexe et dépasse la dynamique de déplacement du rotor de la broche.

Selon un mode particulier de réalisation, on dispose un second capteur de déplacement 607, dans une position parallèle à celle du premier capteur 307, légèrement décalée dans le sens de déplacement de l'outil 207, on compare les signaux V2 délivrés par le second capteur 607 à ceux V1 délivrés par le premier capteur et lorsque la valeur absolue de la différence entre lesdits signaux $|V2-V1|$ dépasse une valeur prédéterminée e, on applique, avec une constante de temps prédéterminée, les signaux V1 délivrés par le premier capteur 307 en premier lieu à la commande du déplacement de la glissière porte-brocha 202; 401, tandis que, lorsque la valeur absolue de la différence entre lesdits signaux $|V2-V1|$ reste inférieure à ladite valeur prédéterminée e, on applique, avec ladite constante de temps prédéterminée, les signaux V1 délivrés par le premier capteur 307 exclusivement aux circuits de commande des paliers magnétiques radiaux 11, 12 et axial 14.

L'utilisation d'un capteur de déplacement 607 palpant en avant-garde le gabarit 380 permet d'assurer une gestion de course efficace 'quelle que soit la fréquence d'usinage, seules les constantes de temps prédéterminées devant être adaptées à cette fréquence d'usinage.

Des circuits analogues à ceux de la figure 12 sont naturellement applicables au mode de réalisation de la figure 7 qui concerna l'usinage de formes cylindriques.

Dans le cas d'usinage en coordonnées polaires, comme dans le cas des figures 8 à 11, des circuits d'asservissement doubles commandant les déplacements de rotor 50 de la broche 1 et de la glissière 202 peuvent également être réalisés d'une façon analogue aux circuits de la figure 12.

L'invention s'applique également à la recopie de surfaces synthétisées par programme informatique et non plus définies par une pièce étalon 308.

Dans ce cas, les informations concernant la surface à usiner ne sont pas fournies par un capteur 307 palpant une surface de référence mais par un moyen informatique délivrant des informations stockées dans une mémoire en fonction de la position de la glissière entraînant l'outil 207, qui est détectée par un capteur 38.

La figure 13 montre un exemple de réalisation tout à fait analogue à celui de la figure 12 mais dans lequel la méridienne de la surface à usiner est synthétisée dans un ordinateur sous la forme d'un ensemble de coordonnées de points dont le nombre est fonction de la précision recherchée.

L'ordinateur gère les déplacements à effectuer par la glissière broche 202 et par le rotor 50 (en accord avec les dynamiques et les précisions de chacun) en fonction du déplacement de la glissière outil 201 donné par le capteur 38. A un point d'abscisse $x_i$ l'ordi-

nateur compare l'ordonnée $y_i$ à l'ordonnée $y_{i-1}$ du point précédent d'abscisse $x_{i-1}$. Si la valeur absolue de la différence $|y_i-y_{i-1}|$ est supérieure à un seuil e correspondant à la dynamique des paliers magnétiques, un ordre est envoyé à la commande de la glissière broche 202 pour la positionner à la valeur $y_i$.

Le capteur 39 mesure une valeur $y_i+ \varepsilon$, puis envoie un ordre aux circuits électroniques de commande du palier axial 14. Le rotor 50 se déplace d'une valeur $e_1$ mesurée par le capteur 62 telle que

$$y_i \pm \varepsilon + e_1 = y_i$$

Le même procédé peut être obtenu pour des surfaces aux formes générales cylindriques ou coniques et peut s'appliquer à un usinage polaire par points.

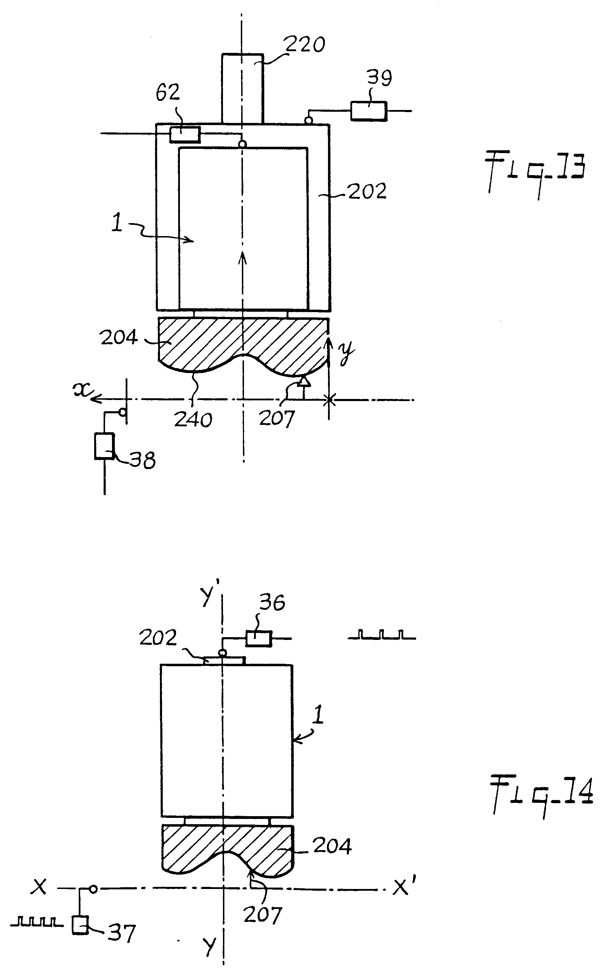

La présente invention permet en outre de contrôler la vitesse de l'outil 207 par rapport à la pièce à usiner. Ceci est illustré par la figure 14 qui concerne un exemple dans lequel il s'agit d'usiner une surface synthétisée dans un ordinateur.

La méridienne est synthétisée dans un ordinateur sous forme de coordonnées de points (x,y) dont la nombre est fonction de la précision recherchée. On met également en mémoire des vitesses Vx, Vy pour chaque point, qui correspondant aux vitesses de la glissière outil 201 et de la glissière broche 202 respectivement.

On place sur la glissière outil 201 un capteur précis 37 qui fournit des impulsions.

Pour une vitesse de la glissière outil Vy donnée on obtient une fréquence fy, l'ordinateur divise cette fréquence de telle sorte que fx = fy/n si Vx = Vy/n et la compare à celle donnée par un capteur 36 placé sur la glissière broche. Pour toutes différences constatées il pilote le rotor en vitesse pour les annuler. Le même dispositif est applicable pour des cylindres.

En l'absence de pièce étalon 204 ou de définition complète d'une pièce à réaliser par l'enregistrement en mémoire des coordonnées point par point d'une surface ou de la méridienne d'une surface, des formes particulières peuvent être usinées en agissant sur les tensions de référence fournies par les circuits 73, 83, 93 des boucles d'asservissement des paliers magnétiques.

En particulier, si une tension de référence périodique variable est appliquée par le circuit 93 à la boucle d'asservissement 90 du palier axial 14, l'axe du rotor de la broche 1 se déplace de façon coaxiale. La surface engendrée par le déplacement de la pièce 204 quand la glissière outil 201 est activée dépend des paramètres adoptés.

Ainsi, en considérant que la fréquence d'usinage est l'inverse du temps que met l'outil à parcourir le rayon de la pièce, si la fréquence de la tension de référence est inférieure à la fréquence d'usinage, on obtient des surfaces convexes ou concaves.

Si la fréquence de la tension de référence est inférieure à la fréquence de rotation de la broche mais supérieure à celle d'usinage, on obtient des spirales à amplitude contrôlable pouvant servir d'étalon de rugosité.

Si la fréquence de la tension de référence est égale ou supérieure à la fréquence de rotation de la broche, on obtient des cannelures rayonnantes.

L'application de tensions de référence variables réglables ou modulables en amplitude et en fréquence par les circuits 73, 83 des boucles d'asservissement des paliers radiaux permet également de réaliser l'usinage de surfaces très particulières avec une grande précision.

## Revendications

1. Procédé d'usinage ultra-précis d'une surface de révolution (240) sur une pièce (204), caractérisé en ce que l'on maintient en position ladite pièce (204) à l'aide du rotor (50) d'une broche porte-pièce (1) monté par l'intermédiaire d'une suspension magnétique active à cinq axes (11,12,14) sur une glissière (202;401) de guidage selon un axe Y'Y, l'usinage étant effectué au moyen d'un outil (207) positionné à l'aide de moyens mécaniques guidés (201,403) déplaçables en translation selon une direction prédéterminée (X'X) ou en rotation autour d'un axe de rotation (430) prédéterminé, en ce que l'on met en oeuvre les étapes suivantes :

     a) asservir les paliers magnétiques actifs radiaux (11,12) et axial (14) de la suspension magnétique avec des fréquences propres inférieures à environ 80 Hz,

     b) entraîner en rotation le rotor (50) de la broche porte-pièce (1) à une vitesse prédéterminée inférieure auxdites fréquences propres et comprise entre environ 20 et 75 Hz,

     c) surveiller en permanence les déplacements de la glissière porte-broche (202;401) et des moyens (201;403) de réglage de postionnement de l'outil (207) à l'aide de capteurs de déplacement (39,38),

     d) modifier de façon sélective les positions radiale et axiale du rotor (50) de la broche porte-pièce (1) par rapport à une position nominale par application aux circuits de commande des paliers magnétiques radiaux (11,12) et axial (14) de tensions de référence variables en fonction de signaux de commande délivrés selon la position de l'outil (207),

     e) inhiber le déplacement de la glissière (202;401) porte-broche lorsque lesdits signaux de commande sont inférieurs à des valeurs prédéterminées, et

     f) déplacer les moyens guidés (201;403) portant l'outil (207) à une vitesse déterminée correspondant à une fréquence d'usinage donnée, définie par l'inverse du temps que met l'outil à parcourir le rayon maximal de la pièce, et en ce que lorsque les signaux de commande sont supérieurs auxdites valeurs prédéterminées, on commande en premier lieu le déplacement de la glissière porte-broche (202,401) en fonction desdits signaux de commande délivrés selon la position de l'outil, puis on met en oeuvre l'étape d) en utilisant comme signaux de commande des signaux représentant l'erreur de positionnement ou de vitesse de la glissière porte-broche (202,401) par rapport à la commande imposée.

2. Procédé selon la revendication 1, caractérisé en ce que l'on entraîne en rotation le rotor (50) de la broche porte-pièce (1) à une vitesse prédéterminée comprise entre 20 et 40Hz.

3. Procédé selon la revendication 1 ou la revendication 2, caractérisé en ce que lesdits signaux de commande sont délivrés selon la position de l'outil (207) par un capteur de déplacement (307) solidaire des moyens guidés( 201;403) de positionnement de l'outil (207) et disposé dans un plan vertical contenant l'axe de l'outil (207) et en ce que l'on dispose en regard dudit capteur de déplacement (307) dans une position fixe une pièce étalon, ou gabarit (308) comprenant une surface de référence (380) à recopier sur la pièce à usiner (204).

4. Procédé selon la revendication 3, caractérisé en ce que l'on dispose un second capteur de déplacement (607), dans une position parallèle à celle du premier capteur (307), légèrement décalée dans le sens de déplacement de l'outil (207), on compare les signaux V2 délivrés par le second capteur (607) à ceux V1 délivrés par le premier capteur (307) et lorsque la valeur absolue de la différence entre lesdits signaux $|V2 - V1|$ dépasse une valeur prédéteminée $\underline{e}$, on applique, avec une constante de temps prédéterminée, les signaux V1 délivré par le premier capteur (307) en premier lieu à la commande du déplacement de la glissière porte-broche (202,401), tandis que, lorsque la valeur absolue de la différence entre lesdits signaux $|V2-V1|$ reste inférieure à ladite valeur prédéterminée e, on applique, avec ladite constante de temps prédéterminée, les signaux V1 délivrés par le premier capteur (307) exclusivement aux circuits de commande des paliers magnétiques radiaux (11,12) et axial (14).

5. Procédé selon la revendication 3, caractérisé en ce que l'on traite les signaux émis par le capteur de déplacement (307) pour élaborer des signaux de commande destinés à former sur la pièce à usiner (204) une surface homothétique ou anamorphosée par rapport à la surface de référence (380) à recopier ou une réplique complémentaire de ladite surface de référence (380).

6. Procédé selon la revendication 1, ou l revendication 2, caractérisé en ce que lesdits signaux de commande sont délivrés selon la position de l'outil (207) à partir d'une mémoire dans laquelle sont enregistrées les coordonnées des différents points de la méridienne échantillonnée d'une pièce étalon à reproduire.

7. Procédé selon la revendication 5, caractérisé en ce que pour chaque position de l'outil (207) on propose à la lecture, à partir d'une mémoire, d'une part des coordonnées (x,y) du point correspondant à la méridienne échantillonnée d'une pièce étalon à reproduire, d'autre part, de la vitesse (Vx) de déplacement des moyens guidés (201;403) de positionnement de l'outil (207) et de la vitesse (Vy) de déplacement de la glissière porte-broche (202;401), on détecte à l'aide d'un premier capteur (37) la vitesse réelle (V′y) de déplacement desdits moyens guidés (201;403), on détecte à l'aide d'un second capteur (36) la vitesse réelle (V,x) de déplacement de ladite glissière (202;401), on compare les valeurs mesurées (V′x, V′y) des vitesses de déplacement aux vitesses lues (Vx,Vy) pour la position considérée de l'outil (207) et, en cas de différence entre une valeur mesurée (V′x,V′y) et une valeur lue (Vx,Vy) on pilote le déplacement radial respectivement axial du rotor (50) de la broche porte-pièce (1) en vitesse de manière à annuler ladite différence de vitesse

8. Procédé selon la revendication 1, caractérisé en ce que lesdits signaux de commande de position du rotor de broche sont constitués par des signaux périodiques d'amplitude et de fréquence prédéterminées.

9. Procédé selon la revendication 8, caractérisé en ce que les signaux périodiques de commande de position de rotor de broche présentent une fréquence inférieure à ladite fréquence d'usinage de manière à réaliser une surface convexe ou concave.

10. Procédé selon la revendication 8, caractérisé en ce que les signaux périodiques de commande de position de rotor de broche présentent une fréquence supérieure à ladite fréquence d'usinage, mais inférieure à ladite vitesse de rotation de la broche porte-pièce de manière à réaliser sur la surface à usiner (240) des spirales à amplitudes contrôlables constituant des étalons de rugosité.

11. Procédé selon la revendication 8, caractérisé en ce que les signaux périodiques de commande de position de rotor de broche présentent une fréquence multiple de la vitesse de rotation de la broche porte-pièce de manière à réaliser sur la pièce à usiner des cannelures rayonnantes.

12. Procédé selon la revendication 1, caractérisé en ce qu'il consiste en outre à appliquer une pointe de gain aux circuits d'asservissement (70,80) des paliers magnétiques radiaux (11,12) au moins pour le premier harmonique de la vitesse de rotation du rotor de la broche.

13. Procédé selon la revendication 1 ou la revendication 2, caractérisé en ce que l'on réalise une opération d'usinage dans une plage de valeurs comprise entre -150 Mm et +150 Mm exclusivement par des déplacements de la broche porte-pièce (1) à l'intérieur de ses paliers.

## Claims

1. Method for ultra-precise machining of a surface of revolution (240) on a workpiece (204), characterized in that said workpiece (204) is held in position by the rotor (50) of a workpiece carrier spindle (1) which is mounted via a five-axis active magnetic suspension (11,12,14) on a slide (202;401) for providing guidance along an axis Y′Y, with machining being performed by means of a tool (207) positioned via mechanical tool guide means (201,403) which are displaceable in translation along a predetermined direction (X′X) or in rotation about a predetermined axis of rotation (430), in that the following steps are implemented :

a) servo-controlling of the radial (11,12) and axial (14) active magnetic bearings of the magnetic suspension with natural frequencies of less than about 80 Hz,

b) rotating of the rotor (50) of the workpiece carrier spindle (1) at a predetermined speed which is less than the natural frequencies and which lies between about 20 Hz and 75 Hz,

c) permanent monitoring of the displacements of the spindle carrier slide (202;401) and of the means (201;403) for adjusting the position of the tool (207) by way of displacement sensors (39,38),

d) selective modifying of the radial and axial positions of the rotor (50) of the workpiece carrier spindle (1) about a nominal position by applying reference voltages to the control circuits of the radial (11,12) and axial (14) magnetic bearings, said reference voltages varying as a function of control signals delivered in relation to the position of the tool (207),

e) inhibiting of the displacement of the spindle carrier slide (202;401) when said control signals are less than predetermined values, and

f) displacement of the guided means (201;403) carrying the tool at a determined speed corresponding to a given machining frequency, defined by the reverse time required by the tool for covering the maximal radius of the workpiece, and in that when the control signals are greater than said predetermined values, displacement of the spindle carrier slide (202,401) is initially controlled as a function of said control signals delivered in relation to the position of the tool, after which stage d) is implemented using, as the control signals, signals representative of the positioning or speed error of the spindle carrier slide (202,401) relative to the required control.

2. Method according to claim 1, characterized in that the rotor (50) of the workpiece carrier spindle (1) is rotated at a predetermined speed which is between 20 Hz and 40 Hz.

3. Method according to claim 1 or claim 2, characterized in that said control signals are delivered in relation to the position of the tool (207) by a displacement sensor (307) fixed to the means (201;403) for guiding the position of the tool (207) and disposed in a vertical plane containing the axis of the tool (207), and in that a reference workpiece or template (308) including a reference surface (380) to be copied on the workpiece to be machined (204) is disposed in a fixed position facing said displacement sensor (307).

4. Method according to claim 3, characterized in that a second displacement sensor (607) is disposed in a position parallel to the position of the first sensor (307) and slightly offset therefrom in the direction of tool (207) displacement, with the signals V2 delivered by the second sensor (607) being compared with the signals V1 delivered by the first sensor (307), and when the absolute value of the difference between said signals $|V2 - V1|$ exceeds a predetermined value $\underline{e}$, the signals V1 delivered by the first sensor (307) are initially applied, with a predetermined time constant, to controlling the displacement of the spindle carrier slide (202,401), whereas when the absolute value of the difference between said signals $|V2 - V1|$ remains less than said predetermined value $\underline{e}$, the signals V1 delivered by the first sensor (307) are exclusively applied, with said predetermined time constant, to the circuits controlling the radial (11,12) and axial (14) magnetic bearings.

5. Method according to claim 3, characterized in that the signals emitted by the displacement sensor (307) are processed to generate control signals for the purpose of forming a surface on the workpiece to be machined (204) said surface being homothetic or anamorphosed with respect to the reference surface (380) to be copied, or a complementary replica to said reference surface (380).

6. Method according to claim 1 or claim 2, characterized in that said control signals are delivered in relation to the position of the tool (207) from a memory which stores the co-ordinates of various points of the sampled meridian of a reference workpiece to be reproduced.

7. Method according to claim 5, characterized in that for each position of the tool (207) a memory is read to obtain firstly the co-ordinates (x,y) of the point corresponding to the sampled meridian of a reference workpiece to be reproduced and secondly the speed (Vx) of displacement of the means (201;403) for guiding the position of the tool (207) and the speed (Vy) of displacement of the spindle carrier slide (202;401), the real speed (V'y) of displacement of said tool guided means (201;403) is detected by means of a first sensor (37), the real displacement speed (V'x) of said slide (202;401) is detected by means of a second sensor (36), the measured values (V'x,V'y) of the displacement speeds and the read speeds (Vx,Vy) for position under consideration of the tool (207) are compared, and in the event of a difference between a measured value (V'x,V'y) and a read value (Vx,Vy), the radial and/or the axial displacement of the rotor (50) of the workpiece carrier spindle (1) is speed controlled in such a manner as to cancel said speed difference.

8. Method according to claim 1, characterized in that said spindle rotor position control signals are constituted by periodic signals of predetermined amplitude and frequency.

9. Method according to claim 8, characterized in that the periodic spindle rotor position control signals are at a frequency which is less than said machining frequency, thereby forming a surface which is convex or concave.

10. Method according to claim 8, characterized in that the periodic spindle rotor position control signals are at a frequency which is greater than said machining frequency, but less than said speed of rotation of the workpiece carrier spindle, thereby forming spirals on the surface to be machined (240), which spirals being of controllable amplitude and constituting roughness standards.

11. Method according to claim 8, characterized in that the periodic spindle rotor position control signals are at a frequency which is a multiple of the speed of rotation of the workpiece carrier spindle, thereby forming radiating fluting on the workpiece to be machined.

12. Method according to claim 1, characterized in that it includes means for causing the servo-control circuits (70,80) of the radial magnetic bearings (11,12) to have a gain maximum at least at the first harmonic of the speed of rotation of the rotor of the spindle.

13. Method according to claim 1 or claim 2, characterized in that a machining operation is performed in a range of values comprised between -150 μm and +150 μm exclusively via displacements of workpiece carrier spindle (1) inside its bearings.

**Patentansprüche**

1. Verfahren zur ultra-präzisen Bearbeitung einer Drehoberfläche (240) auf einem Werkstück (204), **dadurch gekennzeichnet**, daß das Werkstück (204) mit Hilfe des Rotors (50) einer Werkstückspindel (1) gehalten wird, der mittels einer aktiven magnetischen Aufhängung mit fünf Achsen (11,12,14) auf einem Führungsgleitstück (202;401) entlang einer Achse Y'Y angeordnet ist, wobei die Bearbeitung mittels eines Werkzeugs (207) erfolgt, das mit Hilfe von geführten mechanischen Einrichtungen (201,403) translatorisch bewegbar ist entlang einer vorbestimmten Richtung (X'X) oder drehbar ist um eine vorbestimmte Drehachse (430), und daß die folgenden Schritte durchgeführt werden:

a) Versorgen der aktiven radialen magnetischen Lager (11,12) und des aktiven axialen magnetischen Lagers (14) der magnetischen Aufhängung mit geeigneten Frequenzen geringer als ungefähr 80 Hz,

b) Versetzen des Rotors (50) der Werkstückspindel (1) in Drehung bei einer vorbestimmten Geschwindigkeit geringer als die geeigneten Frequenzen und zwischen ungefähr 20 und 75 Hz,

c) ständiges Überwachen der Bewegungen des Werkstückspindelgleitstücks (202;401) und den Positionseinstelleinrichtungen (201;403) des Werkzeugs (207) mit Hilfe von Bewegungsaufnehmern (39,38),

d) Verändem auf selektive Weise der radialen und axialen Stellungen des Rotors (50) der Werstückspindel (1) bezüglich einer nominalen bzw. Ausgangsposition durch Aufbringen von variablen Referenzspannungen in Abhängigkeit von Steuersignalen, die gemäß der Stellung des Werkstücks (207) geliefert werden, auf die Steuerkreise der radialen magnetischen tiger (11,12) und des axialen magnetischen tigers (14),

e) Verhindern der Bewegung des Werkstückspindelgleitstücks (202;401), wenn die Steuersignale geringer sind als vorbestimmte Werte, und

f) Bewegen der Führungseinrichtungen (201;403), die das Werkzeug (207) tragen, mit einer vorbestimmten Geschwindigkeit, die einer vorgegebenen Bearbeitungsfrequenz entspricht, definiert durch das Umgekehrte der Zeit, die das Werkzeug braucht, um den maximalen Radius des Werkstücks zu durchlaufen und daß, wenn die Steuersignale größer sind als die vorbestimmten Werte, zunächst die Bewegung des Werkstückspindelgleitstücks (202,401) in Abhängigkeit der Steuersignale gesteuert wird, die gemäß der Werkzeugposition geliefert werden, sodann der Schritt (d) durchgeführt wird unter Verwendung als Steuersignale der Signale, die den Stellungs- oder Geschwindigkeitsfehler des Werkstückspindelgleitstücks (202,401) bezüglich der aufgesetzten Steuerung darstellen.

2. Verfahren nach Anspruch 1, **dadurch gekennzeichnet**, daß der Rotor (50) der Werkstückspindel (1) in einer vorbestimmten Geschwindigkeit zwischen 20 und 40 Hz angetrieben wird.

3. Verfahren nach Anspruch 1 oder 2, **dadurch gekennzeichnet**, daß die Steuersignale gemäß der Werkzeugstellung (207) durch einen Bewegungsaufnehmer (307) geliefert werden, der mit den Führungseinrichtungen (201;403) der Stellung des Werkzeugs (207) verbunden ist und in einer vertikalen Ebene angeordnet ist, die die Achse des Werkzeugs (207) enthält, und daß gegenüber dem Bewegungsaufnehmer (207) in einer festen Stellung ein Eichstück oder eine Schablone (308) angeordnet wird, die eine Referenzoberfläche (380) aufweist, zum Kopieren auf die zu bearbeitende Fläche (204).

4. Verfahren nach Anspuch 3, **dadurch gekennzeichnet**, daß ein zweiter Bewegungsaufnehmer (607) angeordnet wird in einer Position parallel zu jener des ersten Aufnehmers (307), leicht versetzt in Bewegungsrichtung des Werkzeugs (207), daß die Signale V2, die durch den zweiten Aufnehmer (607) geliefert werden, mit jenen V1 verglichen werden, die von dem ersten Aufnehmer (307) geliefert werden und, wenn der absolute Wert der Differenz zwischen den Signalen $|V2-V1|$ einen vorbestimmten Wert e überschreitet, mit einer vorbestimmten Zeitkonstante, die von dem ersten Aufnehmer (307) gelieferten Signalen V1 zunächst aufgebaut werden auf die Bewegungssteuerung des Werkzeugspindelgleitstücks (202,401), wobei, wenn der absolute Wert der Differenz zwischen den Signalen $|V2 - V1|$ geringer bleibt als der vorbestimmte Wert e, die durch den ersten Aufnehmer (307) gelieferten Signale V1 ausschließlich auf die Steuerschaltkreise der radialen (11,12) und des axialen Magnetlagers (14) aufgebracht werden.

5. Verfahren nach Anspruch 3, **dadurch gekennzeichnet**, daß die von dem Bewegungsaufnehmer (307) ausgegebenen Signale verarbeitet werden, um die Steuersignale zu verarbeiten bzw. auszuarbeiten, die dazu bestimmt sind, auf dem zu bearbeitenden Werkstück (204) eine homothetische oder anamorphotische Oberfläche bezüglich der Referenzoberfläche (380), die zu kopieren ist, oder eine komplementäre Wiedergabe der Referenzoberfläche (380) zu bilden.

6. Verfahren nach Anspruch 1 oder 2, **dadurch gekennzeichnet**, daß die Steuersignale gemäß der Werkzeugposition (207), ausgehend von einem Speicher, geliefert werden, in dem die koordinaten der verschiedenen Punkte des Eichmeridians eines Eichstückes, das zu reproduzieren ist, gespeichert sind.

7. Verfahren nach Anspruch 5, **dadurch gekennzeichnet**, daß für jede Position des Werkzeugs (207) für das Lesen, ausgehend von einem Speicher, einerseits der koordinaten (x,y) des Punktes vorgeschlagen werden, der dem Eichmeridian eines zu reproduzierenden Eichstücks entspricht, andererseits der Geschwindigkeit (Vx) der Bewegung der Führungseinrichtungen (201;403) der Stellung des Werkzeugs (207) und der Geschwindigkeit (Vy) der Bewegung des Werkszeugspindelgleitstücks (202;401) entspricht, mit Hilfe eines ersten Aufnehmers (37) die tatsächliche Geschwindigkeit (V'y) der Bewegung der Führungseinrichtungen (201;403) erfaßt wird, mit Hilfe eines zweiten Aufnehmers (36) die tatsächliche Geschwindigkeit (V',x) der Bewegung des Gleitstücks (202;401) erfaßt wird, die gemessenen Werte (V'x,V'y) der Bewegungsge-schwindigkeiten mit den gelesenen Geschwindigkei-ten (Vx,Vy) für die betrachtete Stellung des Werkzeugs (207) verglichen werden und, im Falle eines Unterschieds zwischen einem gemessenen Wert (V'x,V'y) und einem gelesenen Wert (Vx,Vy) die radiale bzw. axiale Bewegung des Rotors (50) der Werkzeugspindel (1) in der Geschwindigkeit derart gesteuert bzw. vorgegeben wird, daß der Geschwindigkeitsunterschied aufgehoben wird.

8. Verfahren nach Anspruch 1, **dadurch gekennzeichnet**, daß die Steuersignale der Position des Werkzeugspindelrotors durch periodische Signale vorbestimmter Amplitude und Frequenz gebildet werden.

9. Verfahren nach Anspruch 8, **dadurch gekennzeichnet**, daß die periodischen Steuersignale der Spindelrotorposition eine Frequenz aufweisen, die geringer ist als die Bearbeitungsfrequenz, derart, daß eine konvexe oder konkave Oberfläche erzeugt wird.

10. Verfahren nach Anspruch 8, **dadurch gekennzeichnet**, daß die periodischen Steuersignale der Position des Spindelrotors eine Frequenz aufweisen, die größer ist als die Bearbeitungsfrequenz, jedoch geringer ist als die Drehgeschwindigkeit der Werkzeugspindel, derart, daß auf der zu bearbeitenden Oberfläche (240) Spiralen erzeugt werden mit einstellbaren Amplituden, die Eichstücke der Rauhigkeit bilden.

11. Verfahren nach Anspruch 8, **dadurch gekennzeichnet**, daß die periodischen Steuersignale der Position des Spindelrotors eine mehrfache Frequenz der Drehgschwindigkeit der Werkzeugspindel aufweisen, um auf dem zu bearbeitenden Werkstück strahlende Kanäle auszubilden.

12. Verfahren nach Anspruch 1, **dadurch gekennzeichnet**, daß es weiterhin daraus besteht, einen Gewinnungspunkt zu den Bedienungsschaltkreisen (70,80) der radialen magnetischen tiger (11,12) wenigstens für die erste harmonische Drehgeschwindigkeit des Spindelrotors aufzubringen.

13. Verfahren nach Anspruch 1 oder 2, **dadurch gekennzeichnet**, daß ein Bearbeitugnsvorgang in einem Wertebereich erzeugt wird zwischen -150 µm und +150 µm ausschließlich durch Bewegungen der Werkzeugspindel (1) im Inneren ihrer lager.

Fig-1

EP 0 289 575 B1

Fig.2

Fig-3

EP 0 289 575 B1

Fig. 4

Fig.5

Fig_6

Fig_7

Fig_8    Fig_9    Fig_10    Fig_11

Fig.12

Fig. 13

Fig. 14

21